# FASCICULE DE BREVET EUROPEEN

(11) **EP 2 092 531 B1**
(45) Date de publication et mention de la délivrance du brevet: **19.09.2012**
(21) Numéro de dépôt: 07857356.5
(22) Date de dépôt: 11.12.2007
(51) Int. Cl.: G21C 3/62, G21C 3/26, G21C 3/28, G21C 21/02

(54) **PROCEDE DE FABRICATION D'ELEMENTS DE COMBUSTIBLE NUCLEAIRE ET CONTENANT POUR LA MISE EN OEUVRE D'UN TEL PROCEDE**
VERFAHREN ZUR HERSTELLUNG VON KERNBRENNSTOFFELEMENTEN UND BEHÄLTER ZUR DURCHFÜHRUNG DIESES VERFAHRENS
METHOD FOR PRODUCING NUCLEAR FUEL ELEMENTS AND CONTAINER FOR REALISING SAID METHOD

(30) Priorité: 12.12.2006 FR 0655443
(43) Date de publication de la demande: 26.08.2009
(73) Titulaire: Commissariat à l'Énergie Atomique et aux Énergies Alternatives, 75015 Paris (FR); Snecma Propulsion Solide, 33187 Le Haillan Cedex (FR)
(72) Inventeur: BROLI, Jérôme, 91100 Corbeil Essonnes (FR); GOYHENECHE, Jean-Marc, 33600 Pessac (FR); MAZAUDIER, Fabrice, 04100 Manosque (FR); LANGLAIS, Francis, 65300 Lannemezan (FR)
(74) Mandataire: Ilgart, Jean-Christophe
(86) Numéro de dépôt international: PCT/EP2007/063645
(87) Numéro de publication internationale: WO 2008/071676

(56) Documents cités:
- EP-A1- 0 789 365
- US-A- 3 463 702
- US-A- 3 657 137
- US-A- 3 833 470

## Description

### DOMAINE TECHNIQUE ET ART ANTÉRIEUR

La présente invention se rapporte à un procédé de fabrication d'éléments de combustible nucléaire, à un contenant pour la mise en oeuvre d'un tel procédé et aux éléments obtenus à partir d'un tel procédé.

Ce combustible dit de nouvelle génération participe aux développements de nouvelles conceptions de réacteurs dits de IV^{ème} génération.

Plus particulièrement, l'invention concerne un procédé de fabrication d'éléments combustibles sous forme d'objets composites en trois dimensions comportant un empilement de particules sphériques céramiques, par exemple de même diamètre (de distribution monomodale) dispersées dans une matrice élaborée par un dépôt chimique en phase gazeuse, en particulier par un procédé d'infiltration chimique en phase vapeur (CVI : « Chemical Vapor Infiltration » en terminologie anglo-saxonne).

Dans le cadre du développement de nouvelles conceptions de réacteurs dits de IV^{ème} génération, il est envisagé un nouveau type d'installation fonctionnant dans le domaine des hautes températures - la température du fluide de refroidissement en sortie de réacteur est supérieure à 800°C - avec un flux neutronique rapide et un caloporteur gaz ; ces installations sont appelées réacteurs à caloporteur gaz (RCG).

Les RCG fonctionnent avec un flux rapide assurant la possibilité d'atteindre un taux de conversion supérieur à 1 (surgénération) et/ou une capacité à transmuter des déchets (produits de fission et actinides mineurs).

Le fluide caloporteur est un gaz, par exemple de l'hélium permettant d'atteindre en sortie du réacteur un niveau de température suffisamment élevé, qui est compatible avec les applications envisagées de production d'électricité avec un rendement élevé (par exemple en cycle direct) ou de production d'hydrogène.

Il est recherché un niveau de sûreté et de fiabilité en fonctionnement, supérieur à celui atteint dans les systèmes des précédentes générations.

Pour atteindre les conditions neutroniques de fonctionnement satisfaisantes, des fractions volumiques de matériau combustible dans le milieu réactif supérieures à 20-25 % sont requises et ceci suivant la densité et l'enrichissement en matériau fissile du combustible.

Les autres matériaux intervenant dans la composition des structures occupant la fraction volumique restante ont la propriété de transparence neutronique afin de ne pas dégrader le flux en intensité et en spectre et de posséder des caractéristiques thermomécaniques adaptées aux températures de fonctionnement des réacteurs qui sont proches de 1200°C.

En outre, afin de réduire les risques de pollution du caloporteur en cas de ruptures d'éléments combustibles, il est préférable de réduire autant que faire se peut, la quantité de produits de fission susceptible d'être relâchée par rupture élémentaire consécutive à un événement initiateur. Un matériau dense et thermomécaniquement résistant est alors recherché.

Ainsi, on cherche à réaliser dans le cadre du développement des RCG, des éléments de combustible nucléaire ayant une teneur volumique en atomes fissiles compatible avec les conditions de fonctionnement neutronique et la densité de puissance volumique du volume réactif, assurant le transfert thermique entre le matériau combustible et le fluide caloporteur, et enfin assurant le confinement des produits de fission solides et gazeux relâchés par le combustible.

Il existe différents types de combustibles qui peuvent convenir :
- Le combustible dispersé, dans lequel la matière fissile sous forme de bille ou de bâtonnet se trouve dans une matrice inerte assurant les fonctions thermomécaniques et la rétention des produits de fission recherchés. Les billes ou les bâtonnets peuvent se présenter sous la forme de plaquettes revêtues en deux dimensions ou en trois dimensions.
- Le combustible à particules, dans lequel la matière fissile est constituée de sphères enrobées par des matériaux inertes assurant les fonctions thermomécaniques et de rétention des produits de fission, on note ici une analogie avec les combustibles des réacteurs HTR (High Temperature Reactors). Dans ce type de combustible, l'assemblage des sphères enrobées forme des plaquettes revêtues.
- Le combustible à solution solide, dans lequel la phase fissile est une solution solide d'actinides sous forme de pastilles gainées, avec le gainage comme barrière de confinement. Ce combustible se trouve sous la forme de pastilles, qui seront empilés au sein d'une gaine cylindrique.

Le combustible dispersé apparaît comme le plus apte à correspondre aux attentes énoncées ci-dessus.

Dans le cas des billes, les éléments de combustible nucléaire comportent un empilement aléatoire de billes en contact les unes avec les autres au sein d'une matrice inerte. Ces éléments ont la forme de cylindres appelés compacts CERCER/3D.

Ces compacts comportent une matrice de matériau inerte d'une grande densité et d'une grande homogénéité, au sein de laquelle la distribution de billes est réalisée, cette matrice satisfaisant aux exigences de contraintes thermiques, mécaniques et de rétention des produits de fission.

Il est apparu que le carbure de silicium est un matériau très approprié du fait de son comportement thermique et mécanique et de sa transparence neutronique. Il est donc particulièrement adapté aux conditions de fonctionnement des réacteurs RCG.

Il est en outre recherché, pour la réalisation des ces compacts, une compacité la plus proche possible de 100 % et un temps d'élaboration court. En outre, le maintien des caractéristiques chimiques, structurales, mécaniques et thermiques du composé fissile et plus largement du combustible est également recherché.

Lors de l'élaboration de l'élément combustible, il est largement souhaitable d'utiliser des voies d'élaboration de la matrice de carbure de silicium nécessitant des températures inférieures aux températures maximales de fonctionnement des réacteurs RCG, estimées aujourd'hui à 1200°C. Cette contrainte de température interdit par exemple totalement l'utilisation de procédés d'élaboration classiques par frittage de poudre puisque la température de frittage est comprise entre 1800°C et 2000°C. De plus, la composition, la structure et la microstructure du combustible sont plus facilement conservées à des températures modérées. Par ailleurs, il est préférable d'éviter des contraintes mécaniques sur les billes, ainsi les opérations d'usinage du compact apparaissent donc inappropriées.

Le brevet FR2744557 décrit la réalisation d'une dispersion de billes combustibles de 10 µm au sein d'une matrice élaborée par frittage de manière à obtenir un espace entre la matrice et le combustible.

Le brevet US3657137 décrit la réalisation d'objets composites cylindriques en trois dimensions constitués de particules d'UO₂ dispersées au sein d'une matrice céramique poreuse également élaborée par frittage. Suivant les cas, la distribution des billes peut être monomodale (c'est-à-dire composée de particules de même taille) ou bimodale (c'est-à-dire composée de particules de deux tailles différentes), cette dernière permettant d'augmenter le pourcentage volumique de matière fissile au sein de l'élément combustible.

Dans le cas des réacteurs RCG, on recherche donc un procédé d'élaboration permettant la réalisation de compacts CERCER/3D, dans lequel la température est inférieure à une température critique, la durée de fabrication est relativement courte et qui n'applique pas ou peu de contraintes mécaniques aux billes de combustible nucléaire.

Les procédés dits « en phase fluide », notamment les procédés de dépôts chimiques en phase gazeuse (CVD : « Chemical Vapor Deposition » en terminologie anglo-saxonne) apparaissent comme particulièrement adaptés, car ils respectent les contraintes de température limite (les températures utilisées ne dépassent pas 1000-1050°C) et n'appliquent pas de contraintes mécaniques.

Lorsque le substrat sur lequel l'espèce chimique est déposée, est poreux, le procédé CVD est qualifié de procédé d'infiltration chimique (CVI pour « Chemical Vapor Infiltration » en terminologie anglo-saxonne).

Le procédé CVI est utilisé de façon industrielle pour la densification de matériaux composites tissés en deux ou trois dimensions, par exemple dans le secteur aéronautique, dans lesquels les dimensions caractéristiques des espaces inter-fibres à combler sont de quelques dizaines de micromètres. Ce procédé comporte les étapes de décomposition en température d'un ou plusieurs précurseurs gazeux (réactions homogènes), d'infiltration, puis d'adsorption des précurseurs décomposés au sein d'un substrat poreux, ce qui provoque la formation d'un solide (réactions hétérogènes) responsable de sa densification progressive.

L'une des principales difficultés du procédé CVI est l'adsorption préférentielle du mélange gazeux sur les premières surfaces du substrat poreux rencontrées. Ce phénomène est responsable d'une densification importante des régions voisines de la surface et provoque un appauvrissement de la phase gazeuse en espèces réactives au fur et à mesure que l'on s'approche du coeur de la structure à densifier. Cet appauvrissement en espèces réactives est responsable d'un gradient de densification.

Les inventeurs ont pensé à appliquer le procédé CVI utilisé dans un tout autre domaine, à la fabrication des éléments de combustible nucléaire à partir de billes céramiques, notamment pour densifier un empilement de billes.

Cependant les procédés CVI de l'état de la technique ne permettent pas de fabriquer des objets, formés par un empilement de billes. En effet, l'empilement de billes n'étant pas autoporteur, il n'est pas possible de réaliser des objets, par exemple cylindriques.

L'utilisation d'un contenant pour maintenir les billes dans une forme déterminée au moins pendant une partie de la densification provoque une densification hétérogène du fait d'une infiltration unidirectionnelle des gaz.

En outre, il est préférable que les contenants ou contenants utilisés pour la mise en forme de l'empilement de billes soient chimiquement inertes, afin d'éviter les interactions de type diffusive entre le contenant et les billes.

De plus, l'élément densifié peut adhérer au contenant.

Il est connu du document US 3 833 470 un procédé de réalisation d'éléments de combustible nucléaire à partir de billes de combustible nucléaire. Les billes sont disposées dans un récipient comportant des orifices dans son fond pour permettre l'introduction de chlorométhylsilanes dans le récipient pour solidariser les billes entre elles. Cependant l'élément de combustible nucléaire comporte à la fois le récipient et les billes agglomérées. Par conséquent, la quantité de matière fissile de l'élément de combustible nucléaire par rapport à son volume est réduite du fait de la présence du contenant. Cette diminution se reproduit autant de fois qu'il y a d'éléments. Il y a donc une perte notable de puissance.

C'est par conséquent un but de la présente invention d'offrir un procédé de réalisation d'éléments de combustible nucléaire comportant des billes dans une matrice, par exemple de carbure de silicium par un procédé CVI.

C'est également un but de la présente invention d'offrir un procédé de fabrication d'éléments de combustible nucléaire à base de matériau sous forme de bille, permettant d'obtenir une densification élevée desdits éléments, et une quantité de matière fissile par unité de volume.

C'est également un but de la présente invention d'offrir un procédé de fabrication d'éléments de combustible nucléaire ayant une densité homogène.

C'est également un but de la présente invention d'offrir un procédé de fabrication d'éléments de combustible nucléaire à base de matériau sous forme de bille, dont la température atteinte, lors de la densification, est inférieure à 1200°C et n'appliquant pas de contrainte mécanique aux billes de combustible nucléaire.

### EXPOSÉ DE L'INVENTION

Les buts précédemment énoncés sont atteints par l'utilisation d'un contenant destiné à être enlevé, celui-ci étant apte à assurer un remplissage maximale en billes, et constitué d'un matériau offrant une tenue mécanique suffisante pour contenir les billes et suffisamment poreux pour permettre une bonne CVI, et pouvant être facilement retiré afin d'éviter de détériorer le contenu.

A cet effet, le contenant est réalisé en matériau ultra-poreux, en particulier un contenant en mousse de graphite dans lequel les billes sont disposées afin de subir une densification chimique en phase vapeur. La structure poreuse du contenant permet une infiltration tridimensionnelle du mélange gazeux. Ainsi toute la surface de l'empilement de billes est exposée au mélange gazeux. L'accès des précurseurs vers le centre de l'empilement de billes est facilité et la densification est rendue plus homogène et plus élevée.

Dans le cas d'un contenant formé par tube dense type tube de graphite, l'infiltration s'effectue uniquement selon une direction, provoquant une densification hétérogène.

En d'autres termes, on prévoit un contenant d'une part apte à laisser passer dans les trois directions de l'espace le mélange gazeux, en particulier du carbure de silicium, et d'autre part apte à maintenir les billes selon un forme déterminée. Ainsi, le mélange gazeux se dépose de manière régulière sur les billes de combustible nucléaire. On évite ainsi une direction préférentielle de densification et l'apparition d'une densification hétérogène.

Le contenant ultra-poreux selon l'invention présente une résistance mécanique suffisante pour résister à un empilement de billes céramiques, et est suffisamment fragile pour permettre sa destruction en vue de son retrait.

Le contenant ultra-poreux présente une très bonne inertie chimique, c'est-à-dire qu'il ne réagit peu ou pas avec les billes céramiques dont il est rempli et avec les précurseurs de l'infiltration en phase vapeur.

Il présente en outre une très bonne inertie thermique, ainsi il est peu ou pas sensible à la température élevée nécessaire à la densification.

Le contenant comporte également des propriétés de faible adhérence vis-à-vis des billes et de la matrice.

La présente invention a alors principalement pour objet un procédé de fabrication d'éléments de combustible nucléaire à partir de billes céramiques comportant les étapes :
a) de mise en place de billes céramiques de combustible nucléaire dans un contenant en matériau ultra-poreux,
b) de densification par infiltration chimique en phase vapeur d'au moins une espèce chimique,
c) de retrait du contenant.

De manière avantageuse, le contenant est retiré au cours de l'étape b), par exemple par polissage ou usinage.

Lors de l'étape b), il peut être prévu une infiltration d'un précurseur organométallique type MéthylTrichloroSilane (MTS) conduisant à l'obtention d'une matrice en carbure de silicium.

Dans un exemple de réalisation, l'étape b) comporte une première sous-étape de densification de 15 heures avant le retrait du contenant et une deuxième sous-étape de densification de 15 heures après le retrait du contenant. La densification s'effectue à une température d'environ 1000°C.

La présente invention a également pour objet un élément de combustible nucléaire obtenu par le procédé selon la présente invention.

De manière avantageuse, l'élément de combustible nucléaire a une compacité au moins égale à 90 %.

Dans un exemple de réalisation particulièrement avantageux, les billes ont toutes sensiblement le même diamètre.

L'élément de combustible nucléaire selon l'invention comporte des billes en céramique dans une matrice de carbure de silicium.

La présente invention a également pour objet un contenant pour la mise en oeuvre du procédé selon la présente invention, le contenant étant réalisé en au moins un matériau ultra-poreux, ledit contenant comportant un revêtement anti-adhérent vis-à-vis d'une espèce chimique de densification.

Le matériau ultra-poreux a avantageusement une porosité de l'ordre de 98%.

De manière avantageuse, le contenant comporte des pores ayant un diamètre compris entre 100 µm et 600 µm, afin de laisser passer les gaz et permettre une bonne infiltration.

Par exemple, le matériau poreux formant le contenant est une mousse de carbone.

Le contenant a, par exemple une forme cylindrique de section circulaire comportant à une extrémité un fond.

Dans un exemple de réalisation, le contenant a un diamètre extérieur compris entre 9 mm et 11 mm, une hauteur comprise entre 12 mm et 14 mm et une épaisseur de la paroi comprise entre 0,4 mm et 1 mm, et une profondeur de l'ordre de 10 mm.

Le contenant peut être réalisé par usinage à l'aide d'un mère de moule.

### BRÈVE DESCRIPTION DES DESSINS

La présente invention sera mieux comprise à l'aide de la description qui va suivre et des dessins annexés, sur lesquels :
- la figure 1 est une vue de dessus d'un contenant selon la présente invention rempli de billes,
- la figure 2 est une vue de côté du contenant selon la présente invention sans les billes,
- la figure 3 est une représentation graphique comparée des vitesses de prise de masse en g/h/cm³ dans le cas d'un contenant selon la présente invention et dans le cas d'un contenant formé par un tube de graphite,
- la figure 4 est représentation graphique de l'évolution de la porosité d'un élément de combustible nucléaire selon la présente invention en fonction du temps en heure en utilisant un contenant selon l'invention et un contenant formé d'un tube en graphite,
- la figure 5 est une représentation schématique d'un mode opératoire d'une étape d'infiltration chimique en phase vapeur du procédé selon l'invention en fonction du temps et du taux de compacité,
- la figure 6 est une représentation graphique de l'évolution de la prise de masse en gramme d'un élément selon la présente invention en fonction du temps en heure,
- la figure 7 est une représentation schématique d'un élément de combustible nucléaire selon la présente invention,
- la figure 8 représente les mesures d'épaisseur de SIC sur un élément de combustible nucléaire selon la présente invention.

### EXPOSÉ DÉTAILLÉ DE MODES DE RÉALISATION PARTICULIERS

Afin de montrer l'efficacité du procédé selon la présente invention et du contenant selon l'invention, la description qui suit va présenter les résultats d'un procédé selon la présente invention et ceux d'un procédé utilisant un contenant en graphite dense.

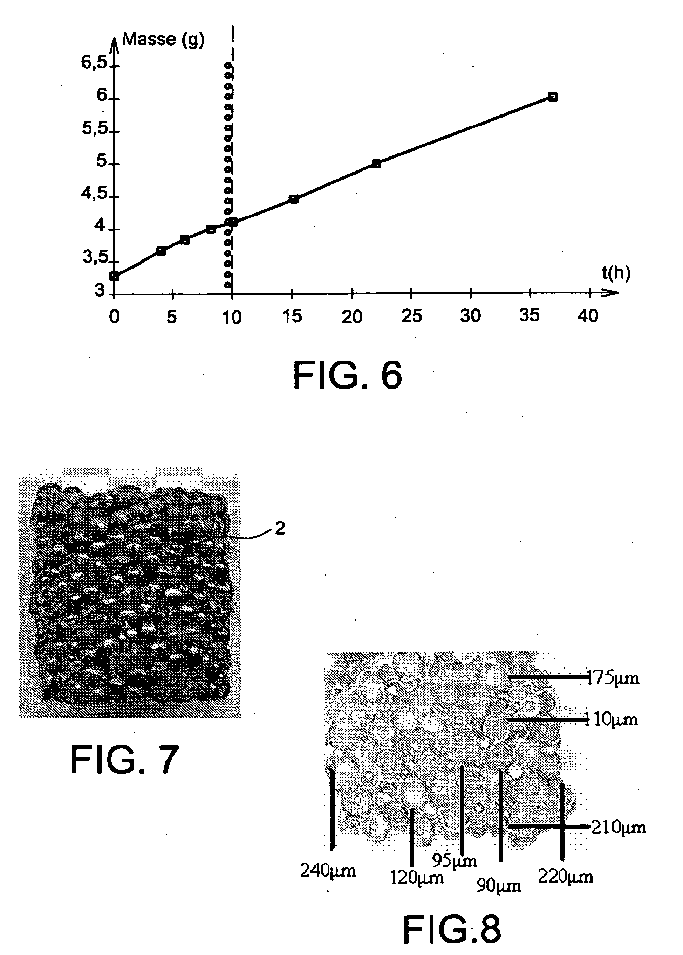

Sur la figure 7, on peut voir un élément de combustible nucléaire obtenu par le procédé selon la présente invention comportant des billes 2 de combustible nucléaire en céramique, par exemple en oxyde d'uranium, noyées dans une matrice 4 maintenant ensemble les billes de manière à former un élément autoporteur.

Les billes peuvent avoir toutes sensiblement le même diamètre, par exemple 1,2 mm.

De manière avantageuse, il peut être envisagé d'utiliser des billes de diamètre différent, par exemple deux diamètres avec un rapport 10 entre les deux. Ceci a pour avantage de permettre d'obtenir une grande densité, les billes de plus petit diamètre venant boucher les espaces libres entre les billes de plus grand diamètre.

Les billes de combustible nucléaire comportent, par exemple un coeur fissile en oxyde d'uranium ou en carbure ou nitrure d'uranium et/ou de plutonium. Pour des raisons de sûreté, une barrière de confinement est prévue, il peut s'agir de revêtements étanches et réfractaires déposés sur ces coeurs fissiles, comme du SiC ou une autre céramique inerte.

Le procédé selon la présente invention prévoit de déposer la matrice autour des billes 2 par infiltration chimique en phase vapeur CVI.

Selon la présente invention, on prévoit de disposer les billes dans un contenant et de soumettre le contenant ultra-poreux rempli au moins en partie de billes à un procédé CVI.

Le procédé selon la présente invention comporte les étapes :
- de mise en place des billes 2 dans le contenant ultra-poreux 7,
- d'insertion du contenant 7 contenant les billes 2 dans un réacteur de CVI et d'application d'une infiltration chimique en phase vapeur, au contenant chargé de billes,
- de retrait du contenant 7.

Nous allons maintenant détailler le procédé selon l'invention et le contenant utilisé.

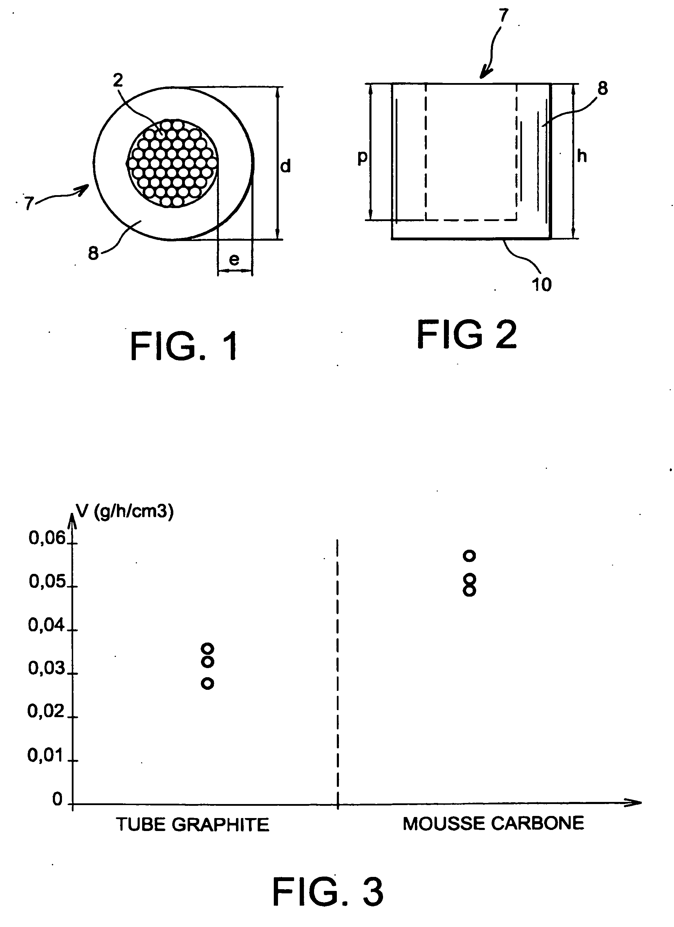

Selon la présente invention, le contenant 7 représenté sur les figures 1 et 2, comporte une paroi 8 cylindrique à section circulaire et un fond 10 de manière à délimiter un volume pour recevoir les billes 2.

Le contenant 7 est réalisé en un matériau ultra-poreux.

On entend dans la présente demande par matériau ultra-poreux un matériau comportant des pores aptes à laisser passer des précurseurs gazeux, tels que du carbure de silicium, ne formant donc pas une barrière. Les pores ont avantageusement un diamètre compris entre 100 µm et 600 µm typiquement. La porosité du matériau est par exemple de l'ordre de 98%.

Il est à noter que l'homme du métier ne peut établir une corrélation directe entre la taille des pores d'un matériau et la porosité de ce matériau, et ne peut donc déduire qu'un matériau ayant des portes de brande taille est nécessairement une porosité élevée.

Le diamètre des pores est déterminé pour laisser passer les gaz et permettre une bonne infiltration, pour retenir et contenir les objets, notamment les billes et pour permettre un retrait aisé du contenant.

Dans l'exemple représenté, le contenant 7 est réalisé en mousse, avantageusement en mousse de carbone.

Le contenant peut être réalisé entièrement en mousse, le contenant est alors découpé d'un seul tenant dans un bloc de mousse.

Il est également envisageable de réaliser un tube en mousse et de rapporter un fond, par exemple en tissu carboné.

La mousse utilisée pour les essais comporte des alvéoles 12 d'environ 400 µm (60 ppi (pore per inch)), cette taille d'alvéoles est suffisante pour permettre le maintien des billes 2, puisque les billes 2 ont un diamètre supérieur à la taille des alvéoles. En outre, cette taille d'alvéole permet une infiltration homogène des gaz précurseurs dans les trois directions de l'espace sans provoquer le comblement total des alvéoles 12.

Le contenant en mousse de carbone présente une résistance mécanique suffisante pour résister à la charge de l'empilement des billes céramiques. Le contenant est cependant suffisamment fragile pour permettre son retrait sans détériorer le compact formé des billes et du carbure de silicium. La mousse est relativement friable, celle-ci est alors facilement usinable. Ainsi, les contenants peuvent être découpés à l'aide d'un mère de moule en acier aux bords tranchants, on obtient un contenant aux dimensions souhaitées.

La mousse de carbone peut comporter des brins en carbone pleins et amorphes.

Dans l'exemple représenté, le contenant a un diamètre extérieur d compris entre 9 mm et 11 mm, une hauteur h comprise entre 12 mm et 14 mm, une paroi d'épaisseur e comprise entre 0,4 mm et 1 mm et une profondeur intérieure p de l'ordre de 10 mm.

Les dimensions du contenant peuvent être rectifiées par polissage. La faible épaisseur de la paroi latérale permet de minimiser la consommation de gaz précurseurs engendrée par le dépôt apparaissant au sein des alvéoles de la mousse.

La mousse est choisie de manière à être réfractaire.

De plus, on recherche une mousse transparente aux précurseurs gazeux de la CVI.

En outre, la mousse est choisie de sorte à être inerte dans les conditions de fabrication des éléments de combustible nucléaire, afin de réduire les risques de réaction entre la mousse et les billes de combustible nucléaire et/ou les précurseurs gazeux.

De manière avantageuse, la mousse est apte à être mise en forme facilement.

D'autres matériaux réfractaires offrant de bonnes propriétés de perméabilité et de porosité pourraient également convenir

Un contenant comportant un tube en graphite dense formant la paroi 8 et un fond 10 en tissu carboné, collé à une extrémité du tube à l'aide d'une colle carbone a également été utilisé. Nous le désignerons par « tube en graphite ».

Une couche de matériau anti-adhérant, par exemple du nitrure de bore pulvérulent, est déposée à l'intérieur du contenant 7 afin de réduire les risques d'adhésion entre l'élément 1 et le contenant 7.

Le tube en graphite comporte également une couche de matériau anti-adhérent.

Les billes sont ensuite disposées à l'intérieur du contenant 7/tube en graphite, puis introduites dans un réacteur à CVI. Le contenant, ainsi que le tube de graphite sont remplis de billes sur une hauteur d'environ 10 mm.

De manière avantageuse, le contenant 7 et le tube en graphite sont déposés sur un porte échantillon constitué d'une tige en graphite au bout de laquelle une grille de zircone mullite quadrillée en nid d'abeille a été posée.

La compacité de l'ensemble de billes 2 avant CVI a été estimée, celle-ci est d'environ 50 % et la taille des cavités présentes entre les billes est comprise entre 300 µm et 400 µm. Il n'est pas nécessaire de prévoir une répartition par vibro-compaction, cependant on peut prévoir une telle étape avant la mise en place du contenant dans le réacteur.

Grâce à la présente invention, on obtient un gain de puissance volumique considérable procuré par la suppression du contenant.

Par exemple, on peut définir une unité de puissance volumique par le rapport entre la quantité de matière fissile contenue dans l'élément combustible et son volume.

Dans le cas de la présente invention, puisque le contenant est éliminé, l'élément combustible n'est composé que de matière fissile agglomérée, l'unité de puissance volumique est égale à la valeur de concentration volumique en matériau fissile du contenu.

Par contre dans le cas d'un élément de combustible nucléaire de l'état de la technique pour lequel le contenant est conservé, cette unité de puissance volumique est réduite. En effet, pour un même volume total, la quantité de matière fissile est réduite.

Par exemple, dans le cas d'un contenant de hauteur 11 mm, de diamètre 12 mm et d'épaisseur 1 mm, l'unité de puissance volumique est égale à 0,63 fois la concentration volumique en matériau fissile du contenu. Par conséquent, le non retrait du moule a pour conséquence une diminution de 37% de l'unité de puissance volumique.

Le gain de puissance volumique obtenue grâce à la présente invention est donc considérable

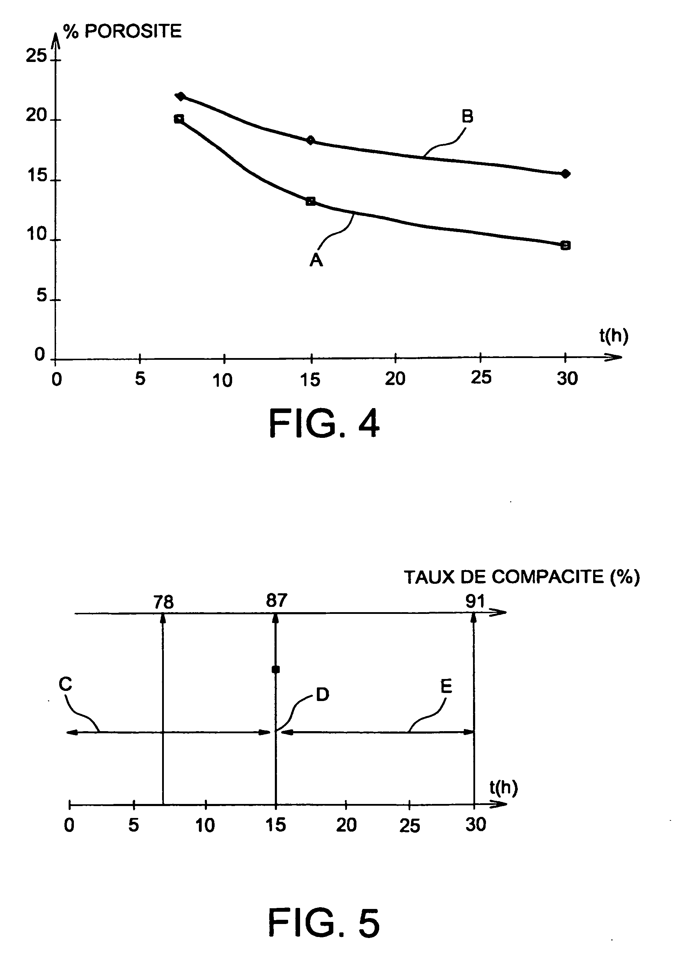

Nous allons maintenant décrire de manière détaillée, l'étape de CVI sur la figure 5 avec un contenant en mousse de carbone. La fabrication d'un élément à partir de billes céramiques contenues dans un tube de carbone comporte les mêmes étapes.

De manière avantageuse, la matrice contenant les billes est en carbure de silicium. Pour réaliser une telle matrice, on utilise par exemple comme précurseur organométallique du MéthylTrichloroSilane (MTS).

Mais tout autre matériau apte à assurer une cohésion des billes entre elles peut convenir et à remplir les conditions de fonctionnement des réacteurs RCG, notamment concernant son comportement thermique et mécanique et sa transparence neutronique. Par exemple, le carbure de zirconium ZrC ou du nitrure de titane TiN peut convenir.

Dans l'exemple décrit, la CVI est réalisée avec une température d'environ 1000°C, une pression P = 9 à 13kPa, un rapport α = P_{H2}/P_{MTS} = 4 à 9, un débit total de précurseur entrant compris entre 31 à 35 1/h. La pression P_{MTS} est la pression d'entrée du MTS.

De manière avantageuse, l'étape de CVI s'effectue en deux temps, un premier temps pendant lequel les billes sont disposées dans le contenant, et un deuxième temps pendant lequel l'empilement de billes n'est plus dans le contenant 7.

Pendant 15 heures (étape C), il y a densification de l'empilement de billes contenu dans le contenant par CVI.

Après les 15 premières heures de densification, l'empilement contenu dans le contenant de mousse de carbone 7 présente un taux de compacité estimé à 87% contre 82% pour l'empilement élaboré avec un tube de graphite.

Lors de l'étape D, le contenant 7 est retiré par polissage ou découpe. En effet, l'empilement densifié lors de l'étape C est suffisamment consolidé et résistant du point de vue mécanique pour être autoporteur. Le contenant peut donc être enlevé.

Le retrait du contenant permet, de manière avantageuse, de réduire le temps de densification.

En outre, un retrait du contenant en fin de densification pourrait poser problème.

Lors de l'étape E, la densification de l'empilement se poursuit par une étape supplémentaire de 15 heures dans les mêmes conditions de densification. Le compact obtenu présente alors une compacité de 91 % dans le cas de l'utilisation d'un contenant en mousse de carbone lors de la première étape de densification et de 88 % dans le cas de l'utilisation d'un contenant en tube de graphite 107.

Les étapes peuvent durer plus ou moins de 15 heures, leur durée étant adaptée en fonction du matériau à injecter et/ou du contenant et/ou des billes. Les deux étapes de densification peuvent également avoir des durées différentes.

On peut constater que pour le même temps de densification (15 heures), les vitesses de prise de masse rapportées à la masse ou au volume total initial des billes de l'empilement contenu dans une mousse de carbone sont supérieures à celles de l'empilement contenu dans le tube de graphite. Or, pour les mêmes conditions d'infiltration, les vitesses de prise de masse V de l'empilement rapportées à la masse ou au volume initial de billes sont représentatives de l'état d'avancement de la densification. Ces vitesses de prise de masse représentées sur la figure 3 ne tiennent pas compte des prises de masse des différents contenants.

Il apparaît que l'utilisation de la mousse de carbone comme contenant pour la densification d'empilements de billes par CVI permet d'augmenter la vitesse de densification grâce à l'infiltration des gaz précurseurs dans les trois directions de l'espace. Ceci est également confirmé par l'évolution du pourcentage de porosité au sein des empilements au cours des 15 premières heures de densification représentée en figure 4. La courbe A représente l'évolution de la porosité pour un empilement de billes dans le contenant en mousse de carbone 207, tandis que la courbe B représente l'évolution de la porosité pour un empilement de billes dans le tube de graphite.

On observe que ce pourcentage diminue plus rapidement dans le cas de l'utilisation de la mousse de carbone.

En outre, il a été constaté que l'utilisation de contenants en matériau poreux, notamment en mousse de carbone permet de minimiser les gradients de densification.

Sur la figure 8, est représentée l'épaisseur de carbure de silicium au sein de l'empilement obtenue après 30 heures de densification, les 15 premières heures de la densification ayant eu lieu dans le contenant en mousse de carbone. On peut observer une relative homogénéité de l'épaisseur de carbure de silicium, celle-ci varie 90 µm et 240 µm.

Aucun relevé des épaisseurs au sein de l'empilement densifié à l'aide du tube de graphite n'a pu être effectuée après 15 heures car les dépôts préférentiels à la surface de l'empilement provoqués par l'infiltration unidirectionnelle des gaz précurseurs ont bouchées les voies d'accès. On peut constater à la vue de la figure 6, une diminution de la prise de masse par unité de temps. La prise de masse a été relevée au fur et à mesure de la densification, or le bouchage des pores présents à proximité de la surface provoque une réduction de la surface accessible aux gaz. A partir d'environ 10 heures de densification, la plupart des pores de surface sont fermés et la prise de masse par unité de temps devient constante et liée uniquement au dépôt sur la surface externe de l'échantillon.

Dans le cas de l'utilisation de la mousse de carbone, les pores de surface ne sont pas bouchés et il en est de même pour les alvéoles de la mousse de carbone.

Les éléments de combustible nucléaire obtenus par cette méthode avec les contenants dont les dimensions ont été spécifiées précédemment, ont une hauteur comprise entre 10 mm et 13 mm et un diamètre sensiblement égal à 10 mm.

Le procédé selon la présente invention permet donc de réaliser des éléments compacts formés à partir d'un empilement non autoporteur de billes, lesdits éléments compacts présentant une compacité élevé, notamment supérieure à 90 % et une hétérogénéité réduite.

La présente invention permet d'appliquer un procédé CVI très performants pour réaliser des objets composites, pour la fabrication d'objet de géométrie variable à partir d'empilements d'éléments non autoporteurs, comme par exemples des billes céramiques.

La présente invention s'applique en particulier à la fabrication d'éléments de combustible nucléaire.

## Revendications

1. Procédé de fabrication d'éléments de combustible nucléaire à partir de billes céramiques comportant les étapes :
a) de mise en place de billes céramiques de combustible nucléaire dans un contenant en matériau ultra-poreux,
b) de densification par infiltration chimique en phase vapeur d'au moins une espèce chimique,
c) de retrait du contenant.

2. Procédé selon la revendication 1, dans lequel l'étape c) a lieu au cours de l'étape b).

3. Procédé selon la revendication 1 ou 2, dans lequel l'étape b) comporte l'infiltration d'un précurseur organométallique type MéthylTrichloroSilane (MTS) conduisant à l'obtention d'une matrice en carbure de silicium.

4. Procédé selon l'une quelconque des revendications précédentes, dans lequel le retrait du contenant lors de l'étape c) s'effectue par polissage ou usinage.

5. Procédé selon la revendication 2, dans lequel l'étape b) comporte une première sous-étape de densification de 15 heures avant le retrait du contenant et une deuxième sous-étape de densification de 15 heures après le retrait du contenant et s'effectue à une température d'environ 1000°C.

6. Elément de combustible nucléaire obtenu par le procédé selon l'une quelconque des revendications précédentes.

7. Elément de combustible nucléaire selon la revendication 7 ayant une compacité au moins égale à 90 %.

8. Elément de combustible nucléaire selon l'une des revendications 6 et 7, dans lequel les billes ont toutes sensiblement le même diamètre.

9. Elément de combustible nucléaire selon l'une quelconque des revendications 6 à 8 en combinaison avec la revendication 3, dans lequel les billes sont en céramique dans une matrice de carbure de silicium.

10. Contenant pour la mise en oeuvre du procédé selon l'une des revendications 1 à 5, réalisé en au moins un matériau ultra-poreux, ledit contenant comportant un revêtement anti-adhérent vis-à-vis d'une espèce chimique de densification, par exemple du nitrure de bore pulvérulent.

11. Contenant selon la revendication précédente, dans lequel le matériau ultra-poreux a une porosité de l'ordre de 98%.

12. Contenant selon la revendication 10 ou 11, dans lequel le matériau poreux est une mousse de carbone.

13. Contenant selon l'une quelconque des revendications 10 à 12, de forme cylindrique de section circulaire comportant à une extrémité un fond.

14. Contenant selon la revendication précédente, dont un diamètre extérieur est compris entre 9 mm et 11 mm, une hauteur est comprise entre 12 mm et 14 mm, une épaisseur de la paroi est comprise entre 0,4 mm et 1 mm, et une profondeur intérieure de l' ordre de 10 mm.

15. Contenant selon l'une quelconque des revendications 10 à 14, réalisé par usinage à l'aide d'un mère de moule.

## Claims

1. Method of manufacturing nuclear elements from ceramic balls comprising the steps of:
a) placing ceramic nuclear fuel balls in a container made from ultra-porous material,
b) densification by chemical vapour infiltration of at least one chemical species,
c) removal of the container.

2. Method according to claim 1, in which step c) takes place during step b).

3. Method according to claim 1 or 2, in which step b) comprises the infiltration of an organometallic precursor of the MethylTrichloroSilane (MTS) type leading to the obtaining of a silicon carbide matrix.

4. Method according to any of the preceding claims, in which the removal of the container during step c) takes place by polishing or machining.

5. Method according to claim 2, in which step b) comprises a first densification substep of 15 hours before the removal of the container and a second densification substep of 15 hours after the removal of the container and takes place at a temperature of approximately 1000°C,

6. Nuclear fuel element obtained by the method according to any one of the preceding claims.

7. Nuclear fuel element according to claim 6, having a compactness of at least 90%.

8. Nuclear fuel element according to one of claims 6 and 7, in which the balls all have substantially the same diameter.

9. Nuclear fuel element according to any one of claims 6 to 8 in combination with claim 3, in which the balls are made from ceramic in a silicon carbide matrix.

10. Container for implementing the method according to one of claims 1 to 5, produced from at least one ultra-porous material, said container comprising a coating that is anti-adherent vis-à-vis a densification chemical species, for example powdery boron nitride.

11. Container according to the preceding claim, in which the ultra-porous material has a porosity of around 98%.

12. Container according to claim 10 or 11, in which the porous material is a carbon foam.

13. Container according to any one of claims 10 to 12, cylindrical in shape with a circular cross section comprising a bottom at one end.

14. Container according to the preceding claim, with an outside diameter of between 9 mm and 11 mm, a height of between 12 mm and 14 mm, a wall thickness of between 0.4 mm and 1 mm, and an internal depth of around 10 mm.

15. Container according to any one of claims 10 to 14, produced by machining by means of master mould.

## Patentansprüche

1. Verfahren zur Herstellung von Kernbrennstoffelementen aus Kerarnikkugeln, das die folgenden Verfahrensschritte umfasst:
a) Einbringen von Kernbrennstoff-Keramikkugeln in einen Behälter aus ultraporösem Werkstoff,
b) Verdichtung durch chemisches Tränken in Dampfphase mit mindestens einer Art von chemischem Stoff,
c) Entfernen des Behälters.

2. Verfahren nach Anspruch 1, bei dem der Verfahrensschritt c) während des Verfahrensschritts b) stattfindet.

3. Verfahren nach Anspruch 1 oder 2, bei dem Verfahrensschritt b) das Tränken mit einem metallorganischen Zwischenstoff des Typs MethylTrichlorSilan (MTS) beinhaltet, was zur Herstellung einer Siliciumkohlenstoff-Matrize führt.

4. Verfahren nach einem der vorherigen Ansprüche, wobei das Entfernen des Behälters in Verfahrensschritt c) durch Schleifen oder Spanen erfolgt.

5. Verfahren nach Anspruch 2, wobei Verfahrensschritt b) einen ersten 15-stündigen Teilschritt der Verdichtung vor dem Entfernen des Behälters und einen zweiten 15-stündigen Teilschritt der Verdichtung nach dem Entfernen des Behälters umfasst und bei einer Temperatur von ca. 1000 °C erfolgt.

6. Kernbrennstoffelement, welches mit dem Verfahren nach einem der vorherigen Ansprüche hergestellt wird.

7. Kernbrennstoffelement nach Anspruch 6, welches eine Dichte von mindestens 90 % aufweist.

8. Kernbrennstoffelement nach einem der Ansprüche 6 und 7, bei dem die Kugeln alle im Wesentlichen den gleichen Durchmesser aufweisen.

9. Kernbrennstoffelement nach einem der Ansprüche 6 bis 8 in Kombination mit Anspruch 3, bei dem die Kugeln aus Keramik in einer Siliciumkohlenstoff-Matrize bestehen.

10. Behälter zur Durchführung des Verfahrens nach einem der Ansprüche 1 bis 5, welcher aus mindestens einem ultraporösen Werkstoff hergestellt ist, wobei dieser Behälter eine Antihaftbeschichtung gegenüber einer chemischen Art von Verdichtungsstoff, beispielsweise pulverförmigem Bornitrid, aufweist.

11. Behälter nach dem vorherigen Anspruch, wobei der ultraporöse Werkstoff eine Porosität in der Größenordnung von 98 % besitzt.

12. Behälter nach Anspruch 10 oder 11, wobei der poröse Werkstoff ein Kohlenstoffschaum ist.

13. Behälter nach einem der Ansprüche 10 bis 12, welcher mit kreisförmigen Querschnitt zylindrisch geformt ist und an einem Ende einen Boden aufweist.

14. Behälter nach dem vorherigen Anspruch, bei dem ein Außendurchmesser zwischen 9 mm und 11 mm beträgt, eine Höhe zwischen 12 mm und 14 mm beträgt, eine Wanddicke zwischen 0,4 mm und 1 mm beträgt und eine Innentiefe in der Größenordnung von 1 mm besteht.

15. Behälter nach einem der Ansprüche 10 bis 14, der durch Fertigung mit Hilfe einer Gussform ausgeführt wird.
